# EUROPÄISCHE PATENTANMELDUNG

(11) **EP 2 444 247 A1**
(43) Veröffentlichungstag der Anmeldung: **25.04.2012**
(21) Anmeldenummer: 11186163.9
(22) Anmeldetag: 21.10.2011
(51) Int. Cl.: B32B 19/02, B32B 27/06, B32B 17/10, F41H 5/04, B32B 38/00, C03B 33/07

(54) **Verfahren zur Herstellung einer Schutzvorrichtung**

(30) Priorität: 22.10.2010 DE 102010042812
(71) Anmelder: Schott AG, 55122 Mainz (DE)
(72) Erfinder: Dr. Zachau, Thilo, 64625 Bensheim (DE); Götz, Helga, 55262 Heidesheim (DE); Dr. Habeck, Andreas, 55178 Undenheim (DE); Dr. Corvers, Stephan, 65375 Oestrich-Winkel (DE); Dr. Plapper, Volker, 55232 Alzey (DE); Haase, Stefan, 55268 Nieder-Olm (DE)
(74) Vertreter: Hrovat, Andrea Darinka

(57) **Zusammenfassung**

Die vorliegende Erfindung betrifft ein Verfahren zur Herstellung einer Schutzvorrichtung zum Schutz vor Schlag-, Stich-, Schnitt-, ballistischer und Druckwelleneinwirkung, eine mit diesem Verfahren hergestellte Schutzvorrichtung und Verwendungen der Schutzvorrichtung. Die Schutzvorrichtung kann zum Schutz von Gebäuden, Personen, insbesondere Fahrzeuginsassen, und anderen der Gefahr schadhafter Einwirkung ausgesetzten Objekte verwendet werden. Sie zeichnet sich dadurch aus, dass eine Vielzahl einzelner Kacheln in Schichten zusammengefasst sind, die zusammen mit weiteren Schichten einen Verbund darstellen, der optimalen Schutz auch bei Mehrfachtreffern gewährleistet.

## Beschreibung

Die vorliegende Erfindung betrifft ein Verfahren zur Herstellung einer Schutzvorrichtung zum Schutz vor Schlag-, Stich-, Schnitt-, ballistischer und Druckwelleneinwirkung, eine mit diesem Verfahren hergestellte Schutzvorrichtung und Verwendungen der Schutzvorrichtung. Die Schutzvorrichtung kann zum Schutz von Gebäuden, Personen, insbesondere Fahrzeuginsassen, und anderen der Gefahr schadhafter Einwirkung ausgesetzten Objekte verwendet werden.

Im Stand der Technik sind Schutzvorrichtungen bekannt, die einen mehrschichtigen Aufbau haben und innerhalb einzelner Schichten eine Vielzahl individueller Kacheln aufweisen. Die Ausgestaltung derartiger Schutzvorrichtungen mit einer Vielzahl von Kacheln bietet den Vorteil, dass nach einem einzigen Treffer nicht die gesamte Schutzfunktion aufgrund Zerstörung einer Platte verloren geht, sondern weitere Kacheln zum Schutz des jeweiligen Objektes zur Verfügung stehen. Eine solche Schutzvorrichtung ist beispielsweise in WO 01/85443 A1 beschrieben.

Solche Schutzvorrichtungen aus einer Vielzahl von Kacheln haben den Nachteil gegenüber aus großen Platten gefertigten Schutzvorrichtungen, dass die Kacheln in einem aufwändigen Herstellungsprozess aneinander gefügt werden müssen und auch die Herstellung und Handhabung der vielen Einzelteile kostspielig ist. Ferner werden an die Klebstoffe, mit denen die einzelnen Kacheln im Stand der Technik zusammengefügt werden müssen, hohe Anforderungen gestellt. Diese Fügestellen stellen regelmäßig die verwundbarste Stelle der Schutzvorrichtungen im Stand der Technik dar, so dass Maßnahmen ergriffen werden müssen, um die zum Beispiel mit Klebstoff gefüllten Spalten zwischen den einzelnen Kacheln zu schützen. Derartige Schutzvorrichtungen werden beispielsweise in DE 90 06 087 U1 beschrieben.

US 2009/0320675 A1 beschreibt eine transparente Schutzvorrichtung, bei der transparente Kacheln untereinander mit brechzahlangepasstem transparentem Polymer-Material verbunden sind und auf eine transparente Stützplatte auflaminiert sind. Mehrere Schichten untereinander verbundener Kacheln können aufeinander laminiert sein, wobei die senkrecht zur Einwirkungsfläche befindlichen Kanten der Kacheln nicht von Schicht zu Schicht überlappen. Ferner ist das Herstellungsverfahren aufwändig, da kleine Einzelkacheln separat gefertigt und miteinander verklebt werden müssen.

Den Schutzvorrichtungen des Standes der Technik ist gemein, dass in der Regel sehr kleine Kacheln einzeln vorgefertigt und mosaikähnlich angeordnet werden müssen. Darauf werden die Kacheln in dichter Packung gegebenenfalls mit einem Träger fest verbunden und verbleibende Zwischenräume anschließend mit einer Vergussmasse verfüllt. Dabei ist stets eine hohe Konturgenauigkeit der Kacheln einzuhalten.

Es ist daher die Aufgabe der vorliegenden Erfindung, ein Verfahren zur Herstellung von Schutzvorrichtungen und darauf beruhende Schutzvorrichtungen bereit zu stellen, die auch bei mehreren Treffern weiterhin ihre Schutzfunktion ausüben und trotzdem kostengünstig herstellbar sind. Diese Aufgabe wird durch die Gegenstände der Patentansprüche gelöst.

Die Aufgabe wird insbesondere durch ein Verfahren zur Herstellung von Schutzvorrichtungen gelöst, das den Schritt des Bereitstellens eines Kachelpaketes umfasst. Die Bereitstellung eines Kachelpaketes umfasst die Schritte des
- Auflaminierens wenigstens einer Platte eines Kachelmaterials auf eine Polymerfolie,
- Ritzen der Platte auf der der Polymerfolie gegenüberliegenden Seite und
- Brechen der Platte entlang der Ritzlinien, um eine Vielzahl von Kacheln, die auf der Polymerfolie fixiert sind, zu erhalten.

Das so erhaltene Kachelpaket kann dann mit weiteren Schichten zu einer Schutzvorrichtung, z.B. einem Panzerungselement, zusammengefügt werden. Die weiteren Schichten sind grundsätzlich in der Herstellung von Schutzvorrichtungen übliche Schichten, insbesondere Deckschichten/Deckplatten, Zwischenschichten, nichtsegmentierte Platten und/oder Backingschichten. Bevorzugte Ausführungen solcher Schichten sind unten beschrieben.

Vorzugsweise wird pro Polymerfolie genau eine Platte auflaminiert, da so keine aufwändige Ausrichtung mehrerer Platten auf der Polymerfolie notwendig wird. Die Platte kann vor dem Auflaminieren leicht auf das gewünschte Maß zugeschnitten werden. Das Ritzen der Platte kann vor oder nach dem Laminieren erfolgen.

Durch das Brechen der Platte des Kachelmaterials entlang der erhaltenen Ritzlinien werden mehrere freie, dennoch durch die Polymerfolie verbundene Prismen vieleckiger Grundflächen erhalten (Kacheln). Das Brechen erfolgt vorzugsweise durch Zugbelastung der Ritzlinien. Die Kacheln bleiben fest an der Polymerfolie haften. Das Ritzen und das Brechen werden vorzugsweise splittervermeidungsoptimiert durchgeführt. Erhalten werden Kachelpakete, die einzelne Kacheln aufweisen, welche durch die Polymerfolie untereinander verbunden sind, wobei die Spalten zwischen benachbarten Kacheln, also diejenigen Spalten, an denen benachbarte Kacheln aneinandergrenzen, die Begrenzungsflächen (auch: "Bruchspiegel") einer gemeinsamen Bruchspalte darstellen.

Die Flexibilität der Polymerfolie erlaubt einerseits das Brechen der Platte durch Zugbelastung und andererseits die Verwendung der erfindungsgemäßen Schutzvorrichtung in flexiblen Materialien wie etwa schusssicheren Westen.

Gegebenenfalls wird das Brechen der Platte durch die Einwirkung eines steilen Temperatur-Zeit-Gradienten von > ± 50 K/min erreicht, besonders, wenn das Material der Platte einen thermischen Ausdehnungskoeffizienten im Temperaturbereich von 30 bis 300 °C von größer 5 ppm/K aufweist.

Das Ritzen der Platte erfolgt vorzugsweise unter Einsatz von Schneidwerkzeugen, die das Material einritzen, wie insbesondere mithilfe eines Lasers und/oder Schneidrädchens. Dabei wird vorzugsweise mit einer minimalen Anzahl von Schnitten eine maximale Anzahl regelmäßiger Vielecke aufgezeichnet. Dabei sind folgende geometrische Formen erfindungsgemäß bevorzugt:
a. gleichseitige Dreiecke
b. Trapeze
c. regelmäßige Sechsecke und gleichseitige Dreiecke
d. regelmäßige Fünfecke und gleichschenklige und einfache Dreiecke.

Das Ritzen erfolgt vorzugsweise dergestalt, dass ein Aufbrechen aller Ritzlinien gewährleistet ist. Die Platten werden vorzugsweise so geritzt, dass die Kacheln gleichgroße Grundflächen erhalten und vorzugsweise möglichst viele Kacheln übereinstimmende geometrische Form aufweisen.

Sofern beim Brechen Splitter auftreten, schließt sich vorzugsweise ein Schritt der Splitterentfernung an.

Das erfindungsgemäße Verfahren umfasst vorzugsweise ferner den Schritt des Übereinanderlegens wenigstens zweier Kachelpakete und den des nachfolgenden Laminierens. In diesem Schritt kann wahlweise eine Faserwerkstoffkomponente zwischen die Polymerschichten hinzugefügt werden; mit "Polymerschichten" sind hier die Schichten gemeint, die aus Polymeren aufgebaut sind, wie beispielsweise Polymerfolie und Zwischenschicht. Die einzelnen Kachelpakete werden derart übereinandergelegt, dass die Schnittpunkte der Spalten verschiedener Kachelpakete nicht übereinanderliegen. Vorzugsweise sollen die Kacheln des einen Kachelpaketes die Spalten zwischen den Kacheln des anderen Kachelpaketes möglichst vollständig überdecken. Optional schließt sich ein Schritt des Einpassens des so erhaltenen Laminates in einen Metallrahmen oder eine Metallhülle an.

Die Polymerfolie, auf die eine Platte auflaminiert wird, weist bevorzugt eine Dicke zwischen 0,1 und 3 mm, weiter bevorzugt 0,3 bis 1,3 mm auf. Das Auflaminieren der Polymerfolie auf die Platte erfolgt bei Temperaturen und Drücken, die es ermöglichen, das Polymer fest an der Platte haften zu lassen und gleichzeitig ein Ausgasen von im Polymer physikalisch gelösten Substanzen zu vermeiden. Die bevorzugten Polymere der Polyvinylbutyral-, thermoplastischen Polyurethan- sowie Ethylenvinylacetattypen, wie sie zum Beispiel auch zur Herstellung von Mehrscheibensicherheitsverglasung verwendet werden, werden vorzugsweise im Temperaturbereich von 75 bis 200 °C und bevorzugten Umgebungsüberdrücken von 3 bis 15 bar verarbeitet. Die Heiz- und Kühlraten liegen vorzugsweise in einem Bereich von 1 bis 20 K/min und die Haltezeiten bei Maximaltemperaturen im Bereich von 1 bis 300 min.

Die Herstellung eines Verbundes umfassend erfindungsgemäß auf Polymerfolie fixierte Kacheln (Kachelpakete) und weitere solcher oder nichtsegmentierter Platten aus sprödbrüchigen Materialien, Fasermaterialien, Faserverbundmaterialien, Metallen oder anderen Polymeren erfolgt unter prinzipiell ähnlichen Prozessbedingungen wie das Auflaminieren der Polymerfolie auf die Platte.

Die Schutzvorrichtungen weisen vorzugsweise wenigstens zwei Schichten mit jeweils wenigstens einem und bevorzugt genau einem Kachelpaket auf, wobei das Kachelpaket Kacheln und eine Folie umfasst und wobei die Kacheln an Spalten aneinandergrenzen und gemeinsam auf einer Folie befestigt sind, wobei ferner die Schnittpunkte der Spalten eines jeden Kachelpaketes Kacheln des jeweils folgenden Kachelpaketes gegenüberliegen. Gemeint ist also, dass die Schnittpunkte der Spalten eines jeden Kachelpaketes nicht über Schnittpunkten oder Spalten eines folgenden Kachelpaketes angeordnet sind, sondern über den Flächen der folgenden Kacheln.

Schnittpunkt von Spalten ist dabei eine Stelle innerhalb des Kachelpaketes, an der sich wenigstens zwei Spalten treffen, also wenigstens drei Kacheln durch den jeweiligen Schnittpunkt getrennt aneinandergrenzen.

Die Kachelpakete sind also vorzugsweise so angeordnet, dass sich die Spalten eines jeden Kachelpaketes im Wesentlichen nicht im darunter befindlichen folgenden Kachelpaket fortsetzen, sondern vielmehr die Spalten des unteren Kachelpaketes überwiegend von den Kacheln des darüber liegenden Paketes abgedeckt werden.

Die Schutzvorrichtung kann erfindungsgemäß zwei, drei oder auch mehr als drei dieser Kachelpakete umfassen. In einer Ausführungsform weist die Schutzvorrichtung zwei oder drei Kachelpakete auf. In Ausführungsformen, die für besonders sicheren Schutz gegen besonders hohe Angriffsenergie ausgelegt sind, ist es bevorzugt, dass die Schutzvorrichtung bis zu fünf Kachelpakete umfasst.

Die Kachelpakete sind über ein Laminationsverfahren hergestellt. Die Schutzvorrichtung ist über das erfindungsgemäße Herstellungsverfahren herstellbar, wobei üblicherweise und bevorzugt neben wenigstens einem Kachelpaket zusätzliche Komponenten in Form von weiteren Schichten eingesetzt werden. Grundsätzlich sind Schutzvorrichtungen denkbar, die neben wenigstens einem Kachelpaket keine weiteren Schichten umfassen.

Das erfindungsgemäße Herstellungsverfahren erlaubt es, komplizierte Gesamtgeometrien, wie beispielsweise ganze Autotüren, in wenigen einfachen Prozessschritten zu fertigen. Es ist nicht notwendig, unzählige vorgeformte Einzelteile puzzleartig zusammenzufügen, wodurch dieses Verfahren als automatisierbares Verfahren kostengünstig angewandt werden kann. Es sind insbesondere auch keine speziellen Vergussmassen vonnöten.

In einer Ausführungsform der Erfindung sind die Kacheln wenigstens eines Kachelpaketes faserverstärkt. Geeignete Fasermaterialien sind Siliziumcarbidfasern, Kohlefasern und Keramikfasern. Besonders bevorzugt sind alle Kacheln in der Schutzvorrichtung faserverstärkt.

Die "Einwirkungsseite" der erfindungsgemäß hergestellten Schutzvorrichtung ist diejenige Seite, welche dem zu schützenden Objekt abgewandt ist. Dies ist regelmäßig die Seite, von der aus eine potentiell schadhafte Einwirkung auf das zu schützende Objekt zu erwarten ist. Die dem zu schützenden Objekt zugewandte Seite ist die "Objektseite".

In bevorzugten Ausführungsformen weisen die Schutzvorrichtungen der Erfindung auf der Einwirkungsseite der Kachelpakete wenigstens eine Deckplatte auf. Die Deckplatte kann aus verschiedenen Materialien gefertigt sein. Die Art des Materials für die Deckplatte hängt vom geplanten Einsatz der Schutzvorrichtung ab. Soll die Schutzvorrichtung beispielsweise als Bestandteil einer schusssicheren Weste zum Einsatz kommen, wird die Deckplatte aus einem flexiblen Material, wie einem Gewebe, gefertigt sein. Soll die Schutzvorrichtung in Fahrzeugen oder Gebäuden zum Einsatz kommen, sind als Material der Deckplatten Sprödbruchmaterialien, Polymermaterialien, Metalle, Kohlefaser, Holz oder ähnliches denkbar.

Die Deckplatte wird bevorzugt mit einer Zwischenschicht auf das einwirkungsseitig erste Kachelpaket laminiert. Die Dicke der Zwischenschicht beträgt bevorzugt 0,1 bis 30 mm, weiter bevorzugt 1 bis 22 mm und besonders bevorzugt 3 bis 10 mm. Die Zwischenschicht ist bevorzugt eine Polymerschicht. Die Zwischenschicht umfasst bevorzugt Polymere auf Epoxybasis, Polyvinylbutyrale, Polyethylenvinylazetale, Polyurethane oder Mischungen daraus.

In bevorzugten Ausführungsformen weist die Schutzvorrichtung der Erfindung auf der Objektseite der Kachelpakete wenigstens eine Backingschicht auf. Die Backingschicht dient der Verbesserung der Schutzwirkung, insbesondere der vollständigen Abbremsung von Projektilbruchstücken und Splittern der Kacheln. Diese Backingschicht ist bevorzugt eine Polymerschicht. Sie umfasst bevorzugt Polycarbonat, Polymethylenmethacrylat, Aramidfasern (Gelege oder Gewebe), Kevlarfasern (Gelege oder Gewebe) oder Kombinationen daraus. In bevorzugten Ausführungsformen weist die Backingschicht mehrere Polymerschichten auf.

Die Backingschicht ist bevorzugt über eine Zwischenschicht mit dem objektseitig ersten Kachelpaket verbunden. Diese Zwischenschicht ist bevorzugt eine Polymerschicht. Die Zwischenschicht umfasst bevorzugt Polymere auf Epoxybasis, Polyvinylbutyrale, Polyethylenvinylazetale, Polyurethane oder Mischungen daraus. In bevorzugten Ausführungsformen dient die Folie des angrenzenden Kachelpaketes als Zwischenschicht.

Eine bevorzugte Ausführungsform der Erfindung betrifft eine Schutzvorrichtung, die Kacheln aufweist, welche Metallpartikel enthalten. Bevorzugte Metallpartikel sind Eisenspäne, Nichteisenmetallspäne und Späne aus Metalllegierungen. Die Partikel haben bevorzugt ein Volumen von kleiner als 10 mm³; das Verhältnis von Länge zu Durchmesser ist vorzugsweise größer als 2 zu 1.

In einer bevorzugten Ausführungsform weisen die Kacheln wenigstens eines Kachelpaketes auf wenigstens einer Oberfläche Noppen auf. Die Noppen sind insbesondere ellipsoidkalottenförmige Noppen. Vorzugsweise sind die Noppen auf der objektseitigen Oberfläche der Kacheln angeordnet. Die Noppenhöhen betragen bevorzugt 0,1 bis 1 mm. Die größten Halbachsen der Noppen messen bevorzugt 0,1 bis 1 mm, wobei die Gipfelpunkte benachbarter Noppen vorzugsweise Abstände von 0,5 bis 5 mm voneinander aufweisen. Damit sind die Noppen bevorzugt auf derjenigen Oberfläche der Kacheln angeordnet, die im Kontakt mit der Folie des Kachelpaketes steht. Hierdurch wird eine hohe Schallentkoppelung erreicht. Außerdem werden die durch die Kacheln durchtretenden Schall- und Schockwellen an den Noppen unterschiedlich reflektiert, so dass eine Überlagerung einkommender und reflektierter Wellen optimal auslöschend erfolgt.

Die Kachelpakete sind besonders vorteilhaft so orientiert, dass die Spalten zwischen den benachbarten Kacheln überwiegend senkrecht zur Einwirkungsseite ausgerichtet sind. Aufgrund des Herstellungsverfahrens der Kachelpakete kann vorteilhafterweise erreicht werden, dass die Spalten teilweise mit dem Folienmaterial gefüllt sind. Vorzugsweise ist aber wenigstens ein Teil der Spalten nicht komplett mit Folienmaterial gefüllt. Dies trifft bevorzugt auf alle Spalten zu. Dadurch wird eine optimale Schallentkoppelung der einzelnen Kacheln parallel zur Einwirkungsfläche erzielt. In besonderen Ausführungsformen befindet sich in den Spalten keinerlei Polymer.

Aufgrund des Herstellungsprozesses unter Einwirkung von Kapillarkräften vorzugsweise in die Spalten eingedrungene Polymermaterial sorgt für eine feste Verbindung der Kacheln untereinander. Der Grad der Ausfüllung mit Polymermaterial wird von der Viskosität des Materials während des Herstellungsprozesses und damit von der Prozesstemperatur bestimmt. Die Prozesstemperatur ist die Temperatur, bei der die Polymerfolie mit der Platte des Kachelmaterials verbunden wird. Die Prozesstemperatur ist bevorzugt so hoch, dass die Viskosität des Polymers auf Werte abnimmt, die ein Restvolumen gasförmiger Bestandteile in den Spalten zwischen den Kacheln von 0 bis <100 Vol.-%, bevorzugt 0 bis 33 Vol.-%, besonders bevorzugt 0 bis <10 Vol.-% ermöglicht.

Die Kacheln sind prismatisch und weisen vorzugsweise dreieckige, viereckige, fünfeckige oder sechseckige Grundflächen auf; im Herstellungsverfahren wird die Platte des Kachelmaterials entsprechend geritzt. Die Kacheln umfassen vorzugweise Glas oder Glaskeramik, insbesondere bestehen sie im Wesentlichen daraus. Es ist ebenfalls erfindungsgemäß, einen Teil der Kacheln innerhalb der Schutzvorrichtung aus Glaskeramik, einen anderen Teil aus Glas und einen weiteren Teil aus anderen Sprödbruchmaterialien zu fertigen. In bevorzugten Ausführungsformen weisen wenigstens zwei der in der Schutzvorrichtung angeordneten Kachelpakete unterschiedliche Kachelgeometrien auf.

Sofern die Kacheln im Wesentlichen aus Glas bestehen, sind Kalknatronglas, Borosilikatglas, Aluminosilikatglas, Bleiglas, Chalkogenidglas, Kronglas und Flintglas bevorzugt.

Als vorteilhaftes glaskeramisches Kachelmaterial haben sich folgende Glaskeramiken erwiesen:
a. Glaskeramiken des Lithium-Aluminosilikattyps mit Hochquarzmischkristall oder Keatitmischkristall als Hauptkristallphase;
b. Glaskeramiken des Magnesium-Zink-Aluminosilikattyps mit Spinellmischkristall, Sapphirinmischkristall, Cordieritmischkristall, Enstatitmischkristall, Mullitmischkristall oder Korund als Hauptkristallphase;
c. Glaskeramiken des Lithium- oder Lithiumzinksilikattyps mit Lithiumdisilikat, Petalit Lithiummetasilikat oder entsprechenden Mischkristallen als Hauptkristallphase;
d. Glaskeramiken des Borphosphatsilikattyps mit Borphosphat als Hauptkristallphase.

Insbesondere sind Glaskeramiken bevorzugt, die einen Siliziumdioxidgehalt von mindestens 5 Gew.-% aufweisen.

Glaskeramiken im Sinne der Erfindung sind vorzugsweise durch Teilkristallisation von Gläsern hergestellte Sprödbruchmaterialien. Insbesondere werden unter "Glaskeramiken" Materialien verstanden, die
a. durch eine Temperatur-Zeit-Behandlung vom glasigen in einen teilkristallinen Zustand überführt wurden,
b. durch gleichzeitiges Sintern und Kristallisieren von Glas gewonnen wurden (Sinterglaskeramiken) oder
c. durch Abkühlen einer Glasschmelze wenigstens teilweise kristallisiert sind (kristallisierte Gläser).

Glaskeramiken weisen gegenüber Keramiken den Vorteil auf, dass sie kostengünstig auch in großen Formaten hergestellt werden können und eine geringe Dichte haben. In ihrer endballistischen Wirkung sind sie bezogen auf das Flächengewicht eines Schutzsystems Keramiken vergleichbar.

Das Polymermaterial der Polymerfolie ist bevorzugt ausgewählt aus der Gruppe bestehend aus Polymeren und Copolymeren auf Epoxybasis, Polyvinylbutyralen, Polyvinylacetalen, Polyurethanen, Polyethylenterephthalaten, vernetzten und teilvernetzten Polyisoprenen und Polybutadienen sowie Mischungen daraus. Die Polymerfolie hat eine bevorzugte Dicke von 0,3 bis 1,3 mm.

Die Kacheln der erfindungsgemäßen Schutzvorrichtung weisen bevorzugt Grundflächen von 0,5 bis 25 cm², weiter bevorzugt 1 bis 15 cm² auf. In Ausführungsformen mit dreieckigen Kacheln weisen diese Kacheln Grundflächen von vorzugsweise 1 bis 15 cm² auf. In Ausführungsformen mit sechseckigen Kacheln weisen diese bevorzugt Schlüsselweiten von 15 bis 50 mm auf. In Ausführungsformen mit trapezoiden oder fünfeckigen Kacheln haben diese vorzugsweise Grundflächen von 10 bis 25 cm². Die Kacheln eines Kachelpaketes haben bevorzugt eine einheitliche Höhe. Die in der erfindungsgemäßen Schutzvorrichtung enthaltenen Schichten aus gekacheltem bzw. segmentiertem Sprödbruchmaterial (Kachelpakete) weisen bevorzugt Dicken von 2 bis 25 mm, weiter bevorzugt von 4 bis 12 mm auf. Die Kacheln selbst haben vorzugsweise Höhen von 1 bis 22 mm, weiter bevorzugt 3 bis 12 mm; entsprechend werden im Herstellungsverfahren vorzugsweise Platten dieser Dicke eingesetzt.

In einer besonderen Ausführungsform der Erfindung liegen die vieleckigen Grundflächen der Kacheln nicht in einer Ebene, sondern die Grundflächen benachbarter Kacheln sind mit Tilt-Winkeln zwischen 0,1° bis 30°, bevorzugt 1 ° bis 10°, gegeneinander verkippt. Dadurch wird bei Beschuss erreicht, dass eine einzelne Kachel vom Projektil zwar eine starke Zerstörung erfährt, die benachbarten Kacheln jedoch weitgehend unzerstört bleiben und im Falle eines nahe beim ersten Treffer liegenden zweiten Treffers diesem ebenfalls widerstehen können. Erst durch die vorliegende Erfindung wird es möglich, Schutzvorrichtungen mit derartig ausgestalteten Kacheln kostengünstig bereitzustellen.

Nichtsegmentierte Platten aus sprödbrüchigen Materialien, Fasermaterialien, Faserverbundmaterialien, Metallen oder anderen Polymeren können untereinander auch durch Gießharze verbunden werden. Die Herstellungsbedingungen für solche Verbunde richten sich nach denjenigen Temperatur-, Zeit- und Druckparametern, untere denen die Gießharze vernetzen bzw. aushärten und eine optimalen Adhäsion zu den die Gießharzschicht begrenzenden Flächen ausbilden.

Erfindungsgemäß ist auch die Verwendung einer oben beschriebenen Schutzvorrichtung in einer schusssicheren Weste, einem Fahrzeug oder einem Gebäude.

### Ausführungsbeispiele

### Beispiel 1

### Glaskeramik-Kachelpaket A

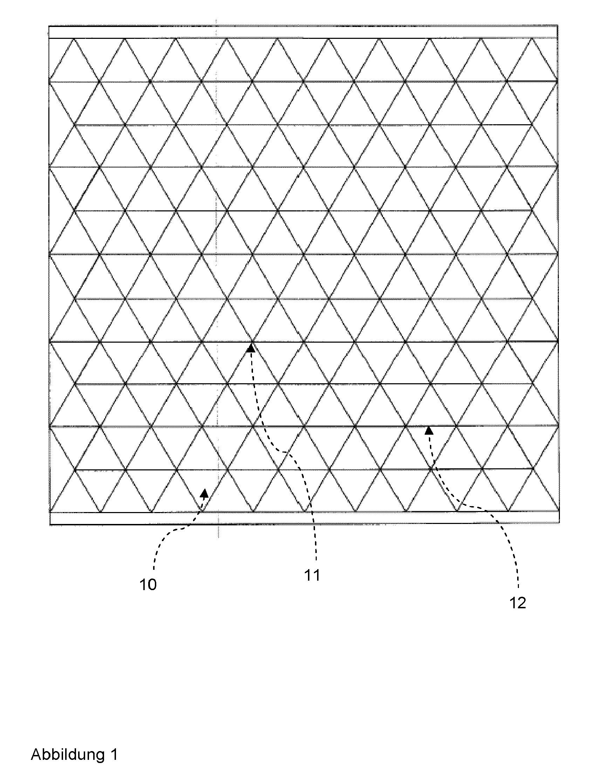

In die Oberseite einer 500x500x5 mm³ Glaskeramikplatte, deren Zusammensetzung der DE102008050263 entspricht und deren Hauptkristallphase Hochquarzmischkristall ist, wird mittels eines 135°-Schneidrädchens unter Zuhilfenahme von Silberschnitt Schneidflüssigkeit (Schneidöl) ein der Abbildung 1 entsprechendes Muster überwiegend gleichseitiger Dreiecke mit einer Kantenlänge von 50 mm geritzt.

Auf die genoppte Unterseite der geritzten Glaskeramikplatte wird eine transparente Polyurethan-Folie Typ A4700 (Deerfield Urethane) der Dicke 0,635 mm entsprechend den Deerfield Lamination Guidelines auflaminiert. Anschließend werden die Ritzlinien auf Zug belastet und die geritzte Glaskeramikplatte entlang der Ritzlinien gebrochen, wodurch Spalten und Schnittpunkte entstehen und ein erfindungsgemäßes Kachelpaket erhalten wird.

### Beispiel 2

### Glaskeramik-Kachelpaket B

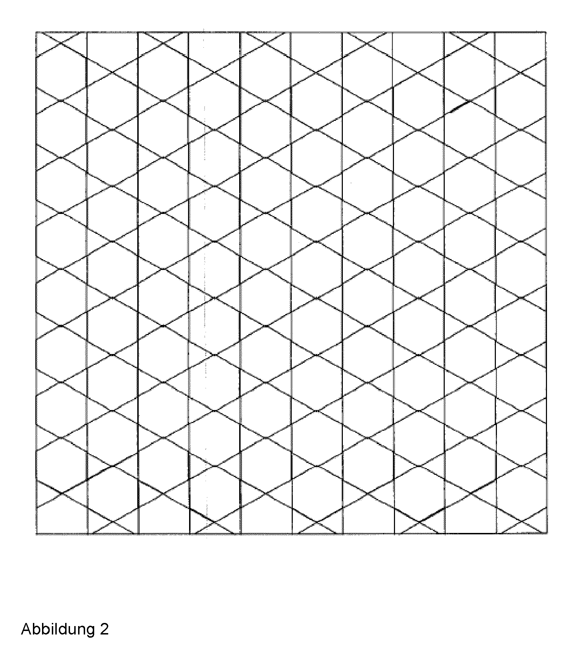

In die Oberseite einer 500x500x8 mm³ Glaskeramikplatte, deren Zusammensetzung der DE102008050263 entspricht und deren Hauptkristallphase Keatit-Mischkristall ist, wird mittels eines 140°-Schneidrädchens unter Zuhilfenahme von "Silberschnitt Schneidflüssigkeit" ein der Abbildung 2 entsprechendes Muster überwiegend gleichseitiger Drei- und Sechsecke geritzt. Die Sechsecke haben eine Schlüsselweite von 50 mm, die gleichseitigen Dreiecke eine Kantenlänge von 28,87 mm.

Auf die genoppte Unterseite der geritzten Glaskeramikplatte wird eine transparente Polyurethan-Folie Typ A4700 (Deerfield Urethane) der Dicke 0,635 mm entsprechend den Deerfield Lamination Guidelines auflaminiert. Anschließend werden die Ritzlinien auf Zug belastet und die geritzte Glaskeramikplatte entlang der Ritzlinien gebrochen, wodurch Spalten und Schnittpunkte entstehen und ein erfindungsgemäßes Kachelpaket erhalten wird.

### Beispiel 3

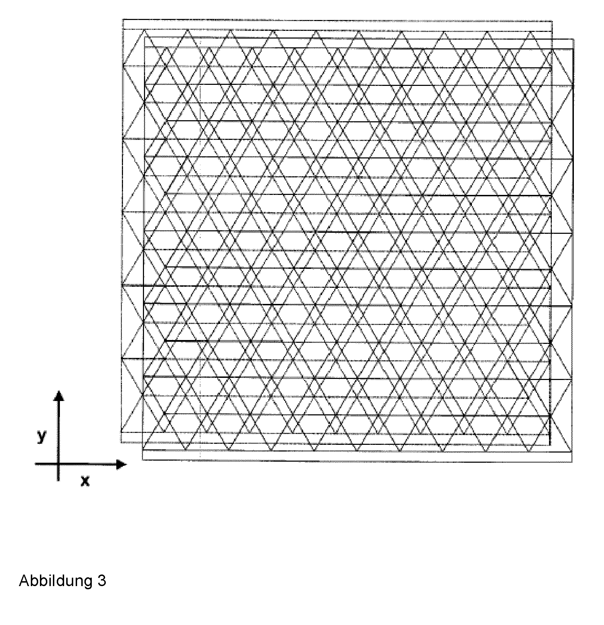

Zwei Glaskeramik-Kachelpakete A werden mit einem Versatz von x = 25 mm und y = -21,65 mm, wie in Abbildung 3 gezeigt, übereinander gelegt. Unter die Folie des unversetzten Glaskeramik-Kachelpakets wird über eine Zwischenschicht von 1,27 mm dickem transparentem Polyurethan A4700 (Deerfield Urethane) eine Backingschicht aus Polycarbonat (Makrolon®, Bayer) der Dicke 5 mm gelegt. Entsprechend den Deerfield Lamination Guidelines wird ein Glaskeramik-Polymer-Verbund hergestellt, dessen Enddicke 17,5 mm beträgt. Das Flächengewicht beträgt 34,75 kg/m². Dieser Verbund widersteht einem 4-Treffer-Beschuss entsprechend dem Schussmuster der ATPD 2352 P (sog. "STANAG-T) mit 5,56 x 17,8 mm Weichkernmunition mit 315 m/s auf 15 m Entfernung.

### Beispiel 4

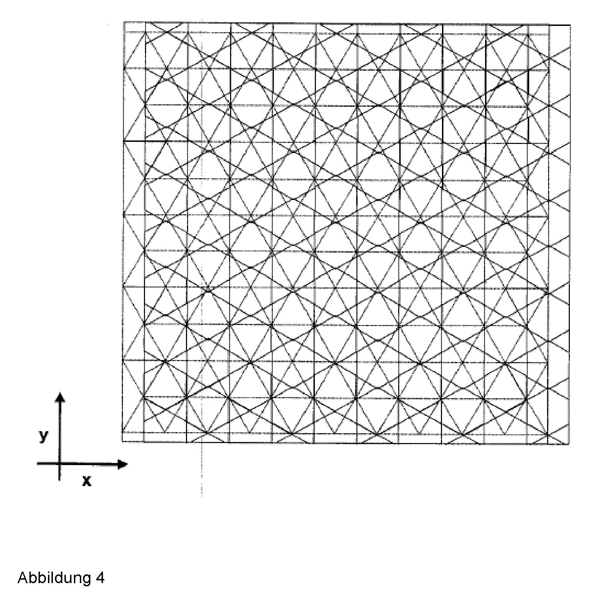

Ein Glaskeramik-Kachelpaket A und ein Glaskeramik-Kachelpaket B werden mit einem Versatz von x = 25 mm und y = 0 mm übereinander gelegt (Abbildung 4). Unter die Folie des unversetzten Glaskeramik-Kachelpakets wird über eine Zwischenschicht aus 1,27 mm dickem transparentem Polyurethan A4700 (Deerfield Urethane) eine Polycarbonatscheibe (Makrolon®, Bayer) der Dicke 5 mm gelegt. Entsprechend den Deerfield Lamination Guidelines wird der Glaskeramik-Polymer-Verbund hergestellt. Dessen Enddicke beträgt 20,5 mm. Das Flächengewicht beträgt 42,55 kg/m².

Dieser Verbund widersteht einem 4-Treffer-Beschuss entsprechend dem Schussmuster der ATPD 2352 P (sog. "STANAG-T)) mit 9x19 mm Weichkernmunition mit 400 m/s auf 5 m Entfernung.

### Beispiel 5

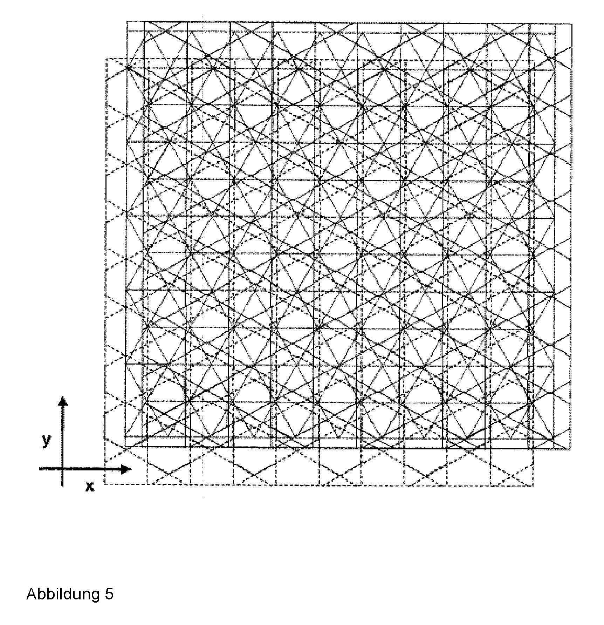

Ein Glaskeramik-Kachelpaket A und zwei Glaskeramik-Kachelpakete B werden mit einem Versatz von x = -25 mm und y = -50 mm (A-Paket zu erstem B-Paket) sowie von x = 20 mm und y = 0 mm (A-Paket zu zweitem B-Paket) übereinander gelegt (Abbildung 5). Unter die Folie des unversetzten Glaskeramik-Kachelpaketes wird über eine Zwischenschicht aus 1,27 mm dickem transparentem Polyurethan A4700 (Deerfield Urethane) eine Faserverbundmatte aus Kevlar-Gewebe ("Low Modulus"-Kevlar: Dichte 1,45 g/cm³, mit Zugfestigkeit 2800 N/mm² und E-Modul 59 kN/mm²; Epoxidharz als Haftvermittler; DuPont) der Dicke 5 mm gelegt. Entsprechend den Deerfield Lamination Guidelines wird der Glaskeramik-Polymer-Verbund hergestellt. Dessen Enddicke beträgt 28,5 mm. Das Flächengewicht beträgt 64,6 kg/m².

Dieser Verbund widersteht einem 4-Treffer-Beschuss entsprechend dem Schussmuster der ATPD 2352 P (sog. "STANAG-T)) mit 7,62 mm x 51 NATO Weichkernmunition mit 830 m/s auf 10 m Entfernung.

### Figurenbeschreibung

Die Figuren dienen der Illustration des Erfindungsgegenstandes, sie schränken die Gegenstände der Patentansprüche nicht ein.

Abbildung 1 zeigt ein erfindungsgemäßes Kachelpaket mit dreieckigen Kacheln (10), die durch Spalten (12) voneinander getrennt sind. Die Spalten treffen sich an Schnittpunkten (11).

Abbildung 2 zeigt ein erfindungsgemäßes Kachelpaket mit dreieckigen und sechseckigen Kacheln.

Abbildungen 3 und 4 zeigen jeweils zwei erfindungsgemäß übereinander angeordnete Kachelpakete. In Abbildung 3 sind die Kacheln derartig versetzt angeordnet, dass sich die Schnittpunkte der Spalten nicht miteinander decken.

Abbildung 5 zeigt drei erfindungsgemäß übereinander angeordnete Kachelpakete, die derartig versetzt angeordnet sind, dass sich die Schnittpunkte der Spalten nicht miteinander decken.

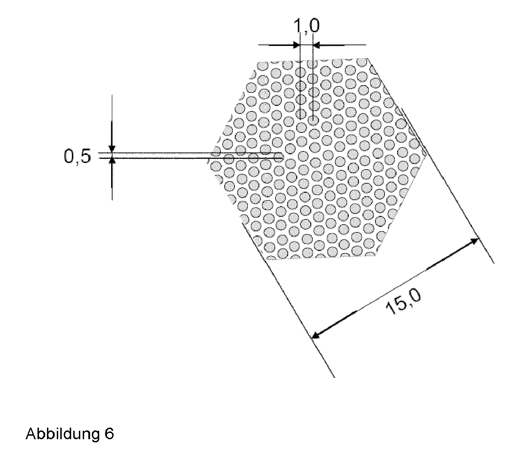

Abbildung 6 zeigt eine hexagonalprismatische Kachel, wie sie in einer erfindungsgemäßen Schutzvorrichtung enthalten sein kann, mit einer Schlüsselweite 15,0 mm mit ellipsoidkallotenförmiger Noppenstruktur in Aufsicht. Die größte Halbachse der Noppen ist 0,5 mm. Der Gipfelpunktsabstand zwischen den Noppen ist 1,0 mm.

In den Abbildungen 7 bis 10 sind die Kachelpakete zur Veranschaulichung als Kachelschichten 16 und Polymerfolien 17 einzeln dargestellt. Jeweils eine Kachelschicht 16, gefolgt von einer Polymerfolie 17, stellt ein Kachelpaket dar.

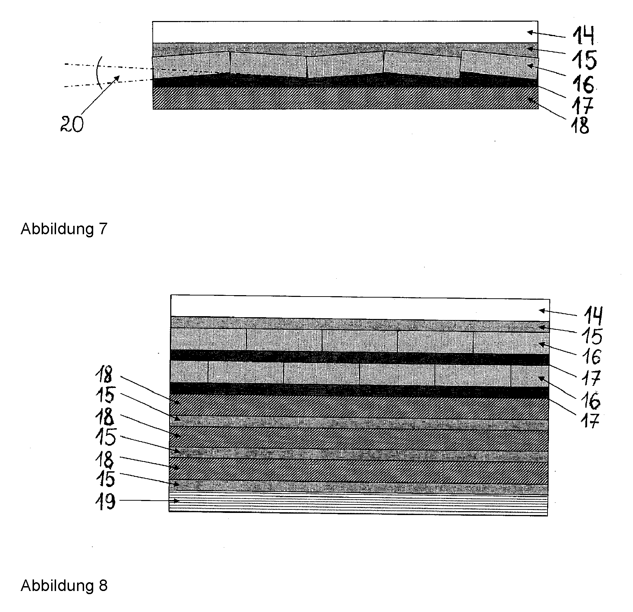

Abbildung 7 zeigt einen Querschnitt einer erfindungsgemäßen Schutzvorrichtung mit einer Deckplatte 14, einer Zwischenschicht 15, einer Kachelschicht 16, einer Polymerfolie 17 und einer nichtsegmentierten Platte 18. Die einzelnen Kacheln sind gegeneinander verkippt angeordnet. Der Tilt-Winkel 20 beträgt 1° bis 10°.

Abbildung 8 zeigt einen Querschnitt durch eine erfindungsgemäße Schutzvorrichtung mit folgenden Elementen: Deckplatte 14, vier Zwischenschichten 15, zwei Kachelschichten 16, zwei Polymerfolienschichten 17, drei nichtsegmentierten Platten 18 und einer Backingschicht 19.

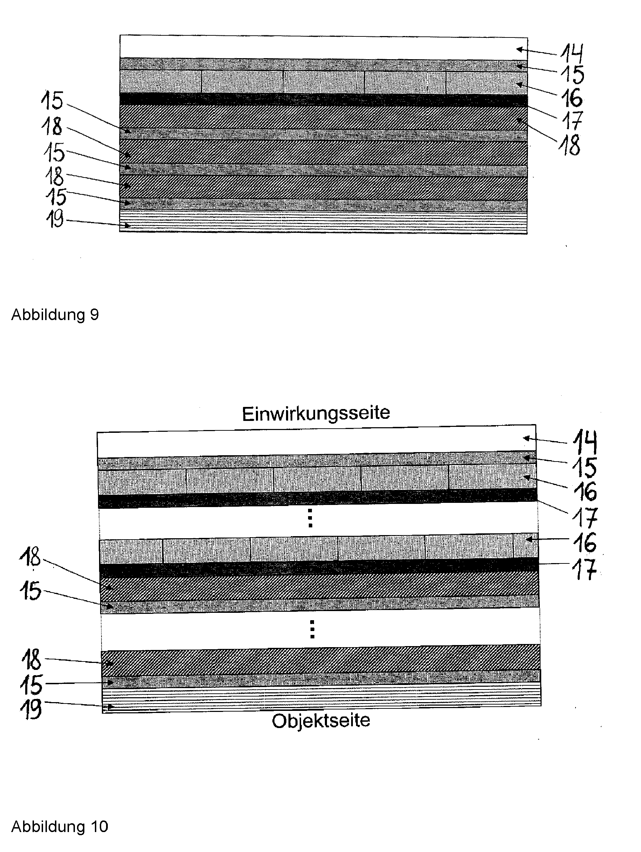

Abbildung 9 zeigt einen Querschnitt durch eine erfindungsgemäße Schutzvorrichtung umfassend eine Deckplatte 14, vier Zwischenschichten 15, eine Kachelschicht 16, einer Polymerfolie 17, drei nichtsegmentierten Platten 18 und einer Backingschicht 19.

Abbildung 10 zeigt einen Querschnitt durch eine erfindungsgemäße Schutzvorrichtung umfassend eine Deckplatte 14, drei Zwischenschichten 15, zwei Kachelschichten 16, zwei Polymerfolien 17, zwei nichtsegmentierten Platten 18 und einer Backingschicht 19. Dabei sind die Deckplatte 14 der Einwirkungsseite und die Backingschicht 19 der Objektseite zugewandt. Die mit drei Punkten gekennzeichneten Schichten stellen eine beliebige Anzahl Schichten und Abfolgen bestehend aus Kachelschichten und Polymerfolien (16 und 17) oder Zwischenschichten und nichtsegmentierten Platten (15 und 18) dar. Es ist erkennbar, dass sich die Spalten der Kachelpakete nur punktweise decken und nicht übereinander liegen.

### Bezugszeichenliste

- 10: Kachel
- 11: Schnittpunkt
- 12: Spalt
- 14: Deckplatte
- 15: Zwischenschicht
- 16: Kachelschicht
- 17: Polymerfolie
- 18: nichtsegmentierte Platte
- 19: Backingschicht
- 20: Tilt-Winkel

## Patentansprüche

1. Verfahren zur Herstellung einer Schutzvorrichtung, mit dem Schritt der Bereitstellung eines Kachelpaketes durch
• Auflaminieren wenigstens einer Platte eines Kachelmaterials auf eine Polymerfolie (17),
• Ritzen der Platte auf der der Polymerfolie (17) gegenüberliegenden Seite und
• Brechen der Platte entlang der entsprechenden Ritzlinien, um eine Vielzahl von Kacheln (10), die auf der Polymerfolie (17) fixiert sind, zu erhalten.

2. Verfahren nach Anspruch 1, wobei die Platte wenigstens eine genoppte Seite aufweist, auf welche die Polymerfolie (17) aufgebracht wird.

3. Verfahren nach Anspruch 1 oder 2, wobei die Schutzvorrichtung wenigstens zwei Schichten mit jeweils wenigstens einem Kachelpaket aufweist, welches eine Kachelschicht (16) und eine Polymerfolie (17) umfasst, wobei die Kacheln (10) an Spalten (12) aneinandergrenzen und gemeinsam auf der Polymerfolie befestigt sind, wobei die Schnittpunkte (11) der Spalten (12) eines jeden Kachelpaketes Kacheln (10) des jeweils folgenden Kachelpaketes gegenüberliegen.

4. Verfahren nach wenigstens einem der vorhergehenden Ansprüche, wobei die Kacheln (10) wenigstens eines Kachelpaketes faserverstärkt sind.

5. Verfahren nach wenigstens einem der vorhergehenden Ansprüche, wobei auf der Einwirkungsseite der Schutzvorrichtung wenigstens eine Deckplatte (14) als weitere Schicht angeordnet wird.

6. Verfahren nach wenigstens einem der vorhergehenden Ansprüche, wobei auf der Objektseite der Schutzvorrichtung wenigstens eine Backingschicht (19) angeordnet wird.

7. Verfahren nach wenigstens einem der vorhergehenden Ansprüche, wobei die Kacheln (10) aus Glas oder Glaskeramik bestehen.

8. Schutzvorrichtung, hergestellt nach einem Verfahren nach wenigstens einem der vorhergehenden Ansprüche.

9. Verwendung einer Schutzvorrichtung nach Anspruch 8 als Bestandteil einer schusssicheren Weste, eines Fahrzeugs oder eines Gebäudes.
